# EUROPEAN PATENT APPLICATION

(11) **EP 3 993 386 A1**
(43) Date of publication of application: **04.05.2022**
(21) Application number: 20843049.6
(22) Date of filing: 17.07.2020
(51) Int. Cl.: H04N 5/225, G03B 17/12, G02B 7/02

(54) **CAMERA LENS, CAMERA MODULE, AND ELECTRONIC DEVICE**

(30) Priority: 19.07.2019 CN 201910657382; 30.09.2019 CN 201910945932
(71) Applicant: HUAWEI TECHNOLOGIES CO., LTD., Shenzhen Guangdong 518129 (CN)
(72) Inventor: LIN, Weichih, Guangdong 518129 (CN); CHANG, Chiachun, Guangdong 518129 (CN); JIANG, Haixia, Guangdong 518129 (CN); HUO, Jieguang, Guangdong 518129 (CN)
(74) Representative: Pfenning, Meinig & Partner mbB
(86) International application number: PCT/CN2020/102792
(87) International publication number: WO 2021/013100

(57) **Abstract**

Embodiments of this application provide a camera lens, a camera module, and an electronic device. The electronic device may include a mobile phone, a tablet computer, a notebook computer, an ultra-mobile personal computer (ultra-mobile personal computer, UMPC), a handheld computer, a walkie-talkie, a netbook, a POS machine, a personal digital assistant (personal digital assistant, PDA), a wearable device, a virtual reality device, a wireless USB flash drive, a Bluetooth speaker/headset, or a mobile or fixed terminal for photographing, for example, a factory-installed terminal. Edge cutting is performed on a lens barrel and a lens, to reduce a volume and a bottom width of the camera lens, reduce space occupied by the camera lens in the electronic device, reduce an area of a hole on a display, and improve a screen-to-body ratio of the display.

## Description

This application claims priority to Chinese Patent Application No. 201910945932.6, filed with the China National Intellectual Property Administration on September 30, 2019 and entitled "CAMERA LENS, CAMERA MODULE, AND ELECTRONIC DEVICE", which is incorporated herein by reference in its entirety.

### TECHNICAL FIELD

Embodiments of this application relate to the field of terminal technologies, and in particular, to a camera lens, a camera module, and an electronic device.

### BACKGROUND

A photographing function is an indispensable function for an electronic device (such as a mobile phone or a tablet computer). To obtain good image quality and photographing effects, a plurality of cameras are disposed on the electronic device to provide various photographing functions.

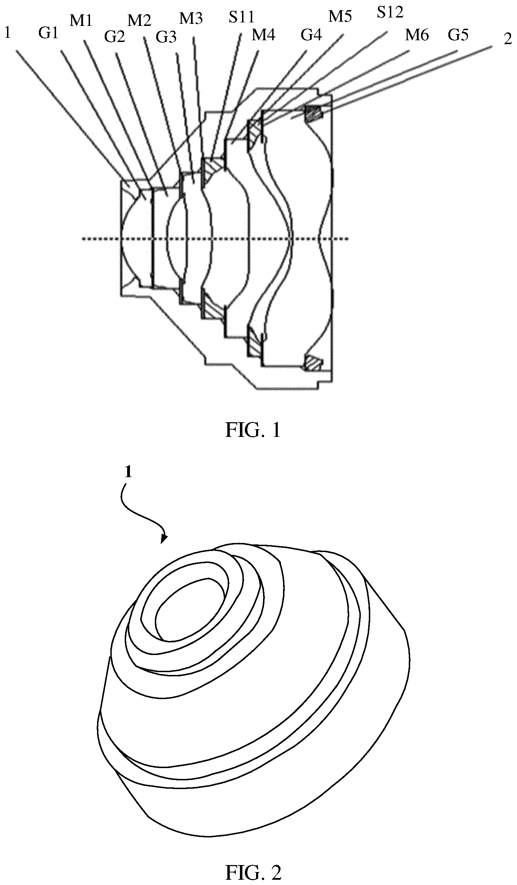

Currently, a photographing apparatus mainly includes a front-facing camera and a rear-facing camera. The front-facing camera is disposed on a surface facing a display of the electronic device, and the rear-facing camera is disposed on a surface facing a rear cover of the electronic device. The front-facing camera mainly includes: a lens assembly, a holder base, a light filter, a photosensitive element, and a flexible printed circuit (FPC) board. A structure of the lens assembly is shown in FIG. 1 and FIG. 2. The lens assembly includes a lens tube 1 and the following components that are sequentially arranged in the lens tube 1: a first lens G1, a first light shield M1, a second lens G2, a second light shield M2, a third lens G3, a third light shield M3, a first spacer S11, a fourth light shield M4, a fourth lens G4, a fifth light shield M5, a second spacer S12, a sixth light shield M6, a fifth lens G5, and a clamping ring 2.

Then, in the foregoing camera lens, effective apertures of the fourth lens and the fifth lens are increased, resulting in a large outer diameter and volume of the lens barrel. In this case, the camera lens occupies large space in the mobile phone, a region (for example, a Notch region) that is on the display and that is opposite to the camera lens is large, and a screen-to-body ratio of the display is reduced.

### SUMMARY

Embodiments of this application provide a camera lens, a camera module, and an electronic device, to reduce a volume and a bottom width of the camera lens, reduce space occupied by the camera lens in the electronic device, reduce an area of a hole on a display, and improve a screen-to-body ratio of the display.

A first aspect of the embodiments of this application provides a camera lens, applied to a camera module having a photosensitive element, including a lens barrel and a front lens group and a rear lens group that are disposed inside the lens barrel. The front lens group is close to an object side, and the rear lens group is close to an image side.

A lens close to the image side in the rear lens group includes an optically effective part and a non-optically effective part disposed around an outer edge of the optically effective part.

The optically effective part includes an effective aperture region and at least one first cutting edge; the non-optically effective part includes a first non-effective region and a second non-effective region, the first non-effective region is disposed along an outer edge of the effective aperture region, the second non-effective region is disposed along the first cutting edge, and there is a second cutting edge on an outer edge of the second non-effective region; and there is at least one cutting surface on an outer side wall that is of the lens barrel and that is close to the rear lens group, and the second cutting edge faces the cutting surface inside the lens barrel.

There is at least one cutting surface on the outer side wall that is of the lens barrel and that is close to the rear lens group, the optically effective part of the lens close to the image side in the lens group has the at least one first cutting edge, and the second non-effective region of the non-optically effective part has the second cutting edge. In this case, a bottom width of the camera lens is reduced, a volume of the camera lens is reduced, and space occupied by the camera lens in a mobile phone is reduced, so that more components can be disposed in the mobile phone. In addition, a width of an end that is of the camera lens and that is close to a camera lens holder (namely, the bottom width of the camera lens) is reduced. For a big notch display, a water-drop notch display, or a punch-hole display, a width of a hole on a display is reduced, a non-display region (for example, a Notch region) on the display is reduced, and a screen-to-body ratio of a display of the mobile phone is increased.

The second non-effective region is disposed along the first cutting edge, and there is a second cutting edge on the outer edge of the second non-effective region. In this case, it is ensured that there is a non-effective aperture region (namely, the second non-effective region) on the first cutting edge of the optically effective part of the lens close to the image side in the lens group. Therefore, when the lens is assembled inside the lens barrel, the first non-effective region of the lens is supported by an arc-shaped support segment inside the lens barrel, and the second non-effective region is supported by a straight support segment inside the lens barrel. After second spacers located on both sides of the lens and a pressing ring are assembled, a partial region of the second spacers and a partial region of the pressing ring may be supported by a support part inside the lens barrel, and a remaining partial region of the second spacers and a remaining partial region of the pressing ring may be bonded to and support the second non -effective region and the first non-effective region of the lens. In this case, the pressing ring and the second spacers support the lens on the first cutting edge, so that an entire outer edge of the lens is supported by the pressing ring and the second spacers, to ensure that the lens is supported more stably when the lens is assembled inside the lens barrel. In addition, the pressing ring and the second spacers are prevented from blocking the effective aperture region of the lens.

In a possible implementation, there are two first cutting edges, and the two first cutting edges are symmetrically disposed with respect to a center of the optically effective part.

In this case, assembly of the lens inside the lens barrel is facilitated. In addition, it is ensured that an optically effective aperture region between the two first cutting edges of the lens does not affect imaging, and a normal imaging effect is maintained after edge cutting is performed on the camera lens.

In a possible implementation, a distance between the two first cutting edges is greater than or equal to a short edge width of the photosensitive element.

In this case, it can be ensured that the lens on which edge cutting is performed does not affect imaging of the photosensitive element, and it is ensured that each photosensitive region on the photosensitive element can sense light, to generate complete image information.

In a possible implementation, a width of the second non-effective region ranges from 0.1 mm to 0.65 mm. In this case, the second non-effective region that is of the lens and that is close to the first cutting edge can be supported inside the lens barrel, and an optically effective part that is of the lens and on which edge cutting is performed is supported by the spacers and pressing rings on both sides, to prevent the pressing rings and the spacers on both sides of the lens from supporting the non-optically effective part of the lens.

In a possible implementation, the lens barrel includes a front lens barrel, a middle lens barrel, and a rear lens barrel, and an outer side wall of the rear lens barrel includes the cutting surface and an arc-shaped side surface connected to the cutting surface. The front lens barrel is close to the object side, and the rear lens barrel is close to the image side. In this case, a width of an end part that is of the lens barrel and that is close to the image side is reduced, a volume of a bottom of the lens barrel is reduced, and space occupied in an electronic device is reduced.

In a possible implementation, there are a plurality of straight support segments on an inner wall that is of the rear lens barrel and that is close to the cutting surface, and there are a plurality of arc-shaped support segments on an inner wall that is of the rear lens barrel and that is close to the arc-shaped side surface. In this case, it can be ensured that the non-optically effective part that is of the lens and on which edge cutting is performed can be supported by the straight support segment, and the non-optically effective part that is of the lens and on which edge cutting is not performed can be supported by the arc-shaped support segment.

In a possible implementation, there are two cutting surfaces and two arc-shaped side surfaces on the outer side wall of the rear lens barrel, and the two cutting surfaces are symmetrically disposed relative to a center line of the lens barrel.

In a possible implementation, a distance between the two cutting surfaces is h1, 0.8h2 ≤ h1 < h2, and h2 is a maximum distance between two arc-shaped surfaces. In this case, it can be ensured that the lens barrel on which edge cutting is performed meets an imaging requirement.

In a possible implementation, the rear lens group includes at least two lenses; and
a lens close to the front lens group in the at least two lenses includes an optically effective part and a non-optically effective part, there is a third cutting edge on an outer edge of the non-optically effective part of the lens close to the front lens group, and the third cutting edge faces the cutting surface.

In a possible implementation, the rear lens group includes three lenses, a middle lens located between two of the three lenses and the lens close to the image side each include an effective aperture region, at least one first cutting edge, a first non-effective region, a second non-effective region, and a second cutting edge. In this case, edge cutting is performed on the optically effective part of the lens close to the image side in the rear lens group and an optically effective part of the lens in the middle of the rear lens group, so that widths of the two lenses in the rear lens group are reduced.

In a possible implementation, the camera lens further includes: at least two spacers located inside the lens barrel, where one of the at least two spacers is located between the front lens group and the rear lens group, and the other spacers in the at least two spacers are located between non-optically effective parts of two adjacent lenses in the rear lens group. Adjacent lenses may be separated by a preset spacing by using a spacer, to meet a requirement of an optical path inside the camera lens.

In a possible implementation, the spacer between the two adjacent lenses in the rear lens group includes an arc-shaped segment and a straight segment, the arc-shaped segment and the straight segment form an annular structure, and the straight segment faces the cutting surface. In this case, the arc-shaped segment and the straight segment can respectively support the first non-effective region and the second non-effective region of the lens on which edge cutting is performed.

In a possible implementation, the camera lens further includes a pressing ring, where the pressing ring is connected to an inner wall at one end that is of the lens barrel and that faces the image side, and the rear lens group is located between the front lens group and the pressing ring; and
the pressing ring includes an arc-shaped region and a straight region, and the straight region faces the cutting surface.

The pressing ring is disposed, so that a lens group inside the lens barrel can be fastened inside the lens barrel by using the pressing ring, and the arc-shaped region and the straight region of the pressing ring can respectively support the first non-effective region and the second non-effective region of the lens on which edge cutting is performed. Therefore, the non-optically effective part on the outer edge of the lens close to the image side are pressed tightly by using the pressing ring, to ensure reliable assembly of the lens group inside the lens barrel.

In a possible implementation, the front lens group includes at least three lenses, and a light shielding sheet is disposed between non-optically effective parts of two adjacent lenses in the three lenses.

A second aspect of the embodiments of this application provides a camera module, including at least the following:
a flexible printed circuit, a photosensitive element, a holder, a light filter, and the camera lens in any one of the first aspect and the possible implementations of the first aspect, where the holder is located between the camera lens and one end of the flexible printed circuit, the photosensitive element is located at one end that is of the flexible printed circuit and that is opposite to the camera lens, and the light filter is located between the photosensitive element and the camera lens.

The camera lens is included, so that a volume of the camera lens in the camera module is reduced, and a width of a bottom part of the camera lens is reduced. A volume of the camera module in an electronic device is reduced, another component may be disposed in the electronic device, and an area of a hole for placing the camera lens on a display is reduced, to improve a screen-to-body ratio of the display.

A third aspect of the embodiments of this application provides an electronic device, including at least the following:
a display, a rear cover, a middle frame, and at least one camera module in the second aspect, where the display and the rear cover are respectively located on two sides of the middle frame, the camera module is disposed on the middle frame, and a camera lens of the camera module faces the display or faces the rear cover.

The camera module is included, so that a hole disposed on a display of an electronic device for placing a camera is reduced, an area of a non-display region (for example, a Notch region) on the display is reduced, and a screen-to-body ratio of the electronic device is larger. In addition, space occupied by the camera module in the electronic device is reduced. In this case, space is saved, so that a component in the electronic device is arranged more conveniently, and more components can be disposed in the electronic device.

In a possible implementation, the camera module is a front-facing camera module, or the camera module is a rear-facing camera module. In this case, when the camera module is a front-facing camera module, a size of the hole on the display can be reduced, and the screen-to-body ratio is increased. When the camera module is a rear-facing camera module, a size of a hole on the rear cover for placing the rear-facing camera module is reduced, and space occupied by a rear-facing camera in the electronic device is reduced.

In a possible implementation, there are two camera modules, one camera module is a rear-facing camera module, and the other camera module is a front-facing camera module. In this case, the size of the hole on the display is reduced, and the size of the hole disposed on the rear cover for placing the rear-facing camera module is reduced. In addition, space occupied by the front-facing camera module and the rear-facing camera module in the electronic device is reduced.

### BRIEF DESCRIPTION OF DRAWINGS

FIG. 1 is a schematic diagram of a cross-sectional structure of an existing lens assembly;
FIG. 2 is a schematic diagram of a structure of a lens barrel in an existing camera lens;
FIG. 3 is a schematic diagram of a structure of an electronic device according to an embodiment of this application;
FIG. 4 is a schematic diagram of an exploded structure of an electronic device according to an embodiment of this application;
FIG. 5 is a schematic diagram of a split structure of a display in an electronic device according to an embodiment of this application;
FIG. 6 is a schematic diagram of structures of a display and a front-facing camera in an electronic device according to an embodiment of this application;
FIG. 7A is a schematic diagram of a structure of a front-facing camera in an electronic device according to an embodiment of this application;
FIG. 7B is a schematic diagram of an exploded structure of a front-facing camera in an electronic device according to an embodiment of this application;
FIG. 8 is a schematic diagram of a cross-sectional structure of a part including: a front-facing camera, a display, a frame, and a rear cover in an electronic device according to an embodiment of this application;
FIG. 9 is a schematic diagram of an exploded structure of a lens assembly in a front-facing camera in an electronic device according to an embodiment of this application;
FIG. 10 is a schematic diagram of a cross-sectional structure of a camera lens in a front-facing camera of an electronic device according to an embodiment of this application;
FIG. 11 is a schematic diagram of a structure of a lens barrel in a front-facing camera of an electronic device according to an embodiment of this application;
FIG. 12 is a schematic diagram of a structure of a bottom end surface of a camera lens in a front-facing camera of an electronic device according to an embodiment of this application;
FIG. 13 is a schematic diagram of a cross-sectional structure of a lens barrel in a front-facing camera of an electronic device according to an embodiment of this application;
FIG. 14 is a schematic diagram of a three-dimensional structure of a lens barrel in a front-facing camera of an electronic device according to an embodiment of this application;
FIG. 15 is a schematic diagram of a structure of a fifth lens in a front-facing camera of an electronic device according to an embodiment of this application;
FIG. 16 is a schematic diagram of a structure of a fifth lens and a photosensitive element in a front-facing camera of an electronic device according to an embodiment of this application;
FIG. 17 is a schematic diagram of a structure of a fourth lens in a front-facing camera of an electronic device according to an embodiment of this application;
FIG. 18 is a schematic diagram of a cross-sectional structure of a second spacer in a front-facing camera of an electronic device according to an embodiment of this application; and
FIG. 19 is a schematic diagram of another exploded structure of a camera lens in a front-facing camera of an electronic device according to an embodiment of this application.

Descriptions of reference numerals:
100: Mobile phone; 10: Display; 11: Hole; 12: Transparent protective cover; 13: Display module; 131: Backlight element;
132: Liquid crystal panel; 21: Camera lens; 211: First lens; 212: Second lens; 213: Third lens; 214: Fourth lens;
2141: Optically effective region; 2142: Third non-effective region; 2143: Third cutting edge; 20: Front-facing camera module;
2144: Fourth non-effective region; 215: Fifth lens; 2151: Effective aperture region; 2152: First non-effective region;
2153: Second non-effective region; 2154: First cutting edge; 2155: Second cutting edge; 216: Sixth lens; 216a: Pressing ring;
217a: Second spacer; 2171: Arc-shaped segment; a1: Arc-shaped inner region; a2: Arc-shaped outer region; 2172: Straight segment; b1: Straight inner region;
b2: Straight outer region; 217b: First spacer; 217c: Third spacer; 218a: Second light shielding sheet; 218b: First light shielding sheet;
219: Lens barrel; 2190: Support part; 2191: Front Lens barrel; 2192: Middle lens barrel; 2193: First arc-shaped side surface;
2194: Second arc-shaped side surface; 2195: Cutting surface; 2196: Arc-shaped side surface; 2197: Rear lens barrel; c1: Straight support segment;
c2: Circular support segment; c3: Arc-shaped support segment; d1: Optically effective part; d2: Non-optically effective part; 22: Camera lens holder;
23: Light filter; 24: Holder; 25: Photosensitive element; 26: Flexible printed circuit; 27: Connector; 30: Middle frame; 31: Side frame; and
32: Metal part; 40: Circuit board; 50: Battery; 60: Rear cover.

### DESCRIPTION OF EMBODIMENTS

Terms used in implementations of this application are merely used to explain specific embodiments of this application, but are not intended to limit this application. The following describes in detail the implementations of the embodiments of this application with reference to the accompanying drawings.

An electronic device provided in the embodiments of this application includes but is not limited to a mobile or fixed terminal with a camera, for example, a mobile phone, a tablet computer, a notebook computer, an ultra-mobile personal computer (ultra-mobile personal computer, UMPC), a handheld computer, a walkie-talkie, a netbook, a POS machine, a personal digital assistant (personal digital assistant, PDA), an event data recorder, or a security device.

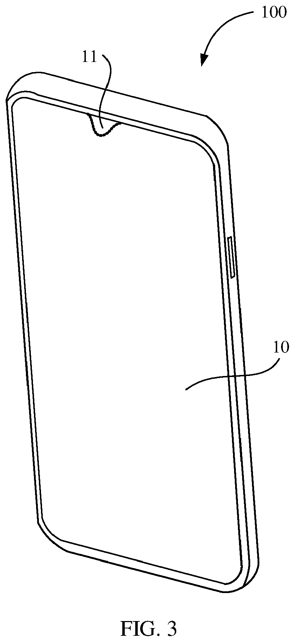

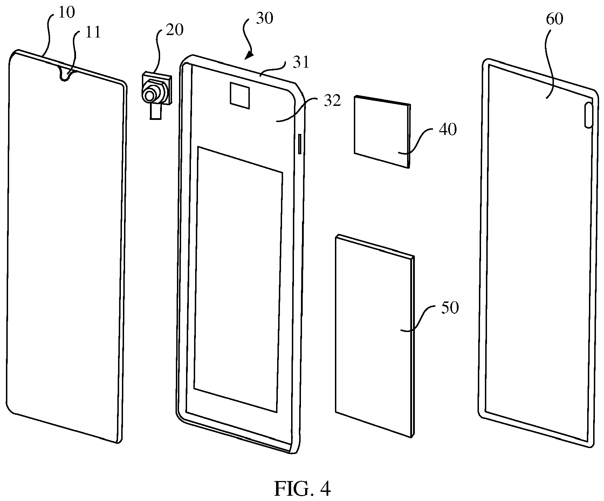

In the embodiments of this application, that the electronic device is a mobile phone 100 is used as an example for description. A display of the mobile phone 100 provided in the embodiments of this application may be a water-drop notch display or a big notch display. The water-drop notch display is used as an example below for description. Referring to FIG. 3 and FIG. 4, the mobile phone 100 may include a display 10 and a rear cover 60. A middle frame 30, a circuit board 40, and a battery 50 may be disposed between the display 10 and the rear cover 60. The circuit board 40 and the battery 50 may be disposed on the middle frame 30. For example, the circuit board 40 and the battery 50 are disposed on a surface that is of the middle frame 30 and that faces the rear cover 60, or the circuit board 40 and the battery 50 may be disposed on a surface that is of the middle frame 30 and that faces the display 10. When the circuit board 40 is disposed on the middle frame 30, an opening may be disposed on the middle frame 30 to place a component on the circuit board 40 in the opening of the middle frame 30.

The battery 50 may be connected to a charging management module and the circuit board 40 by using a power management module. The power management module receives input of the battery 50 and/or the charging management module, and supplies power to a processor, an internal memory, an external memory, the display 10, a camera, a communications module, and the like. The power management module may be further configured to monitor parameters such as a capacity of the battery 50, a cycle count of the battery 50, and a state of health (electric leakage and impedance) of the battery 50. In some other embodiments, the power management module may alternatively be disposed in a processor of the circuit board 40. In some other embodiments, the power management module and the charging management module may alternatively be disposed in a same device.

The display 10 may be an organic light-emitting diode (Organic Light-Emitting Diode, OLED) display, or may be a liquid crystal display (Liquid Crystal Display, LCD).

The rear cover 60 may be a metal rear cover, a glass rear cover, a plastic rear cover, or a ceramic rear cover. A material of the rear cover 60 is not limited in this embodiment of this application.

The middle frame 30 may include a Metal part 32 and a side frame 31. The side frame 31 is disposed around the Metal part 32. Usually, the side frame 31 may include a top side frame, a bottom side frame, a left side frame, and a right side frame, and the top side frame, the bottom side frame, the left side frame, and the right side frame form an annular side frame 31. The middle metal plate 32 may be an aluminum plate, or may be an aluminum alloy, or may be a magnesium alloy. The frame 31 may be a metal frame, or may be a ceramic frame. The middle metal frame 30 and the frame 31 may be clamped, welded, glued, or integrally formed; or the middle metal frame 30 and the frame 31 are fixedly connected through injection molding.

It should be noted that, in some other examples, the mobile phone 100 may include but is not limited to a structure shown in FIG. 4. The rear cover 60 of the mobile phone 100 may be connected to the side frame 31 to form a unibody (Unibody) rear cover. For example, the mobile phone 100 may include the display 10, the Metal part 32, and a battery cover. The battery cover may be the unibody (Unibody) rear cover including the side frame 31 and the rear cover 60. Therefore, the circuit board 40 and the battery 50 are located in space surrounded by the Metal part 32 and the battery cover.

To implement a photographing function, the mobile phone 100 may further include a camera module and a camera flash (not shown). The camera module may include a front-facing camera module 20 and a rear-facing camera (not shown). The rear-facing camera and the flash may be disposed on a surface that is of the middle metal plate 32 and that faces the rear cover 60, and mounting holes that can be used to mount the flash and the rear-facing camera are provided on the rear cover 60. The front-facing camera module 20 may be disposed on a surface that is of the Metal part 32 and that faces the display 10. In the embodiments of this application, locations on which the front-facing camera module 20 and the rear-facing camera are disposed include but are not limited to the foregoing descriptions. In some embodiments, one or N front-facing camera modules 20 and rear-facing cameras may be disposed in the mobile phone 100, where N is a positive integer greater than 1.

It may be understood that the structure illustrated in this embodiment of this application does not constitute a specific limitation on the mobile phone 100. In some other embodiments of this application, the mobile phone 100 may include more or fewer components than those shown in the figure, or combine some components, or divide some components, or have different component arrangements. The components shown in the figure may be implemented by using hardware, software, or a combination of software and hardware.

Based on the foregoing descriptions, in the embodiments of this application, a scenario in which the front-facing camera module 20 is disposed in the mobile phone 100 is used as an example for description.

### Scenario 1

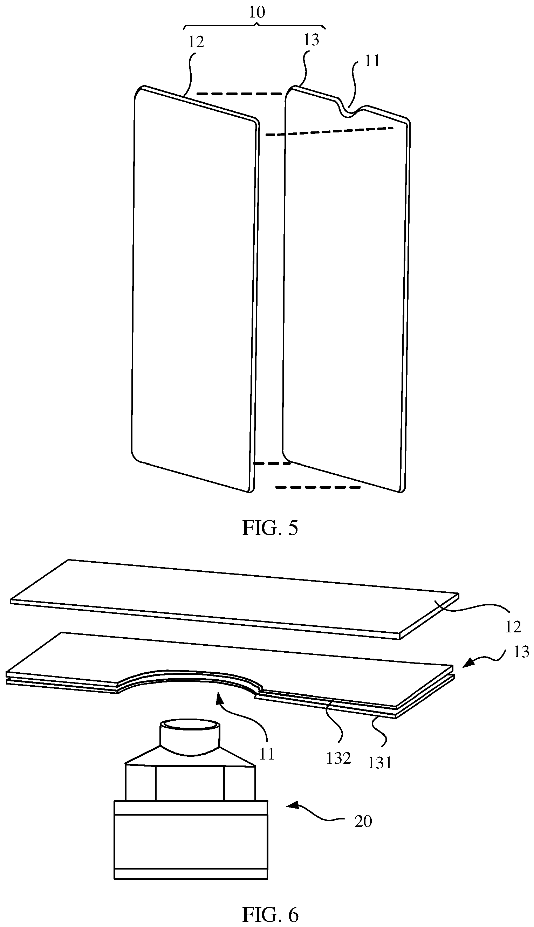

In the embodiments of this application, referring to FIG. 4, to implement photographing of the front-facing camera module, a hole 11 that matches a camera lens of the front-facing camera module 20 is disposed on the display 10. In this case, external light may enter the front-facing camera module 20 to implement photographing. It should be understood that, as shown in FIG. 5, the display 10 may include a transparent protection cover 12 and a display module 13. The transparent protection cover 12 may be, for example, a glass cover or a sapphire cover. When the hole 11 is disposed on the display 10, the hole 11 is specifically disposed on the display module 13 of the display 10.

The display module 13 may be an OLED display module, or the display module 13 may be a liquid crystal display module. When the display module 13 is a liquid crystal display module, as shown in FIG. 6, the liquid crystal display module may include a liquid crystal panel 132 and a backlight element 131. The backlight element 131 is disposed below the liquid crystal panel 132, and is configured to provide a backlight source for the liquid crystal panel 132. When the hole 11 is disposed on the liquid crystal display module 13, the hole 11 may be a through hole or a blind hole. For example, the hole 11 may be disposed on the backlight element 131. In this case, the hole 11 formed on the liquid crystal display module 13 is a blind hole. Alternatively, as shown in FIG. 6, the hole 11 formed on the liquid crystal panel 132 and the backlight element 131 is a through hole.

Usually, the display 10 further includes a touch panel (Touch Panel, TP). The touch panel may be disposed between the display module 13 and a transparent protective cover 12 (namely, a TP on cell), or the touch panel may be disposed in a film layer of the display module 13 (namely, a TP in cell). The display module 13 is configured to output display content to a user, and the touch panel is configured to receive a touch event entered by the user on the display 10.

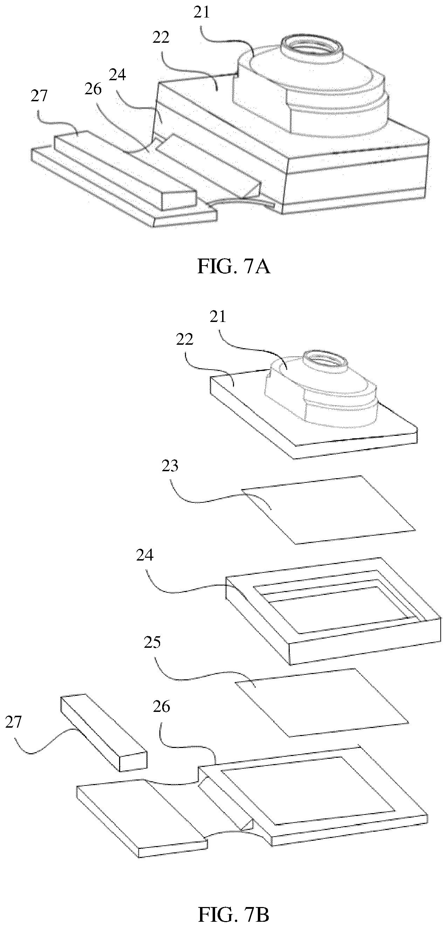

In the embodiments of this application, referring to FIG. 7A, the front-facing camera module 20 may include a camera lens 21, a camera lens holder 22, a holder 24 (Holder), a flexible printed circuit 26 (Flexible Printed Circuit, FPC), and a connector 27. The camera lens 21 is connected to the camera lens holder 22, the camera lens holder 22 is connected to the holder 24, the camera lens 21 is fastened to the holder 24 by using the camera lens holder 22, the holder 24 is fastened to one end of the flexible printed circuit 26, and the connector 27 is fastened to the other end of the flexible printed circuit 26. The camera lens holder 22 and a bottom end of the camera lens 21 may be connected through soldering, snapping-fitting, or gluing, and the camera lens holder 22, the holder 24, and the flexible circuit board 40 are fixedly connected through gluing. A material of the holder 24 may be a plastic or metal material. It should be noted that, the front-facing camera module 20 shown in FIG. 7B is a camera with a fixed focal length. When the front-facing camera module 20 is a camera with a variable focal length, the front-facing camera module 20 may further include a focusing module (not shown), the focusing module is a focusing motor, or the like, and the focusing motor may be disposed on the holder 24.

As shown in FIG. 7B, the front-facing camera module 20 further includes a light filter 23 (Filter) and a photosensitive element 25. The light filter 23 may be located between the camera lens holder 22 and the holder 24. For example, the light filter 23 may cover a hollowed region of the holder 24. The photosensitive element 25 is disposed on one end of the flexible printed circuit 26, and the holder 24 is disposed around an outer edge of the photosensitive element 25.

In the embodiments of this application, the light filter 23 may be an infrared light filter, and the light filter 23 may filter out infrared light, to avoid a case in which the infrared light enters the camera lens 21 and consequently, impact is imposed on imaging.

The photosensitive element 25 may be a charge coupled device (charge coupled device, CCD) or a complementary metal-oxide-semiconductor (complementary metal-oxide-semiconductor, CMOS) phototransistor. The connector 27 is configured to: electrically connect the flexible printed circuit 26 and an image processing unit (Image Signal Processing, ISP) on the circuit board 40, and electrically connect the image processing unit (ISP) and a digital processing unit (Digital Signal Processing, DSP). The image processing unit (ISP) and the digital processing unit (DSP) may be separately disposed on the circuit board 40, or the image processing unit (ISP) and the digital processing unit (DSP) may be integrated together and disposed on the circuit board 40. For example, during photographing, a shutter is opened. Light is transmitted to the photosensitive element 25 through the light filter 23 by using the lens assembly 21. An optical signal is converted into an electrical signal. The photosensitive element 25 transmits, by using the flexible printed circuit 26 and the connector 27, the electrical signal to the ISP for processing. The ISP converts the electrical signal into a digital image signal. The ISP outputs the digital image signal to the DSP for processing. The DSP converts the digital image signal into an image signal in a standard format such as RGB or YUV.

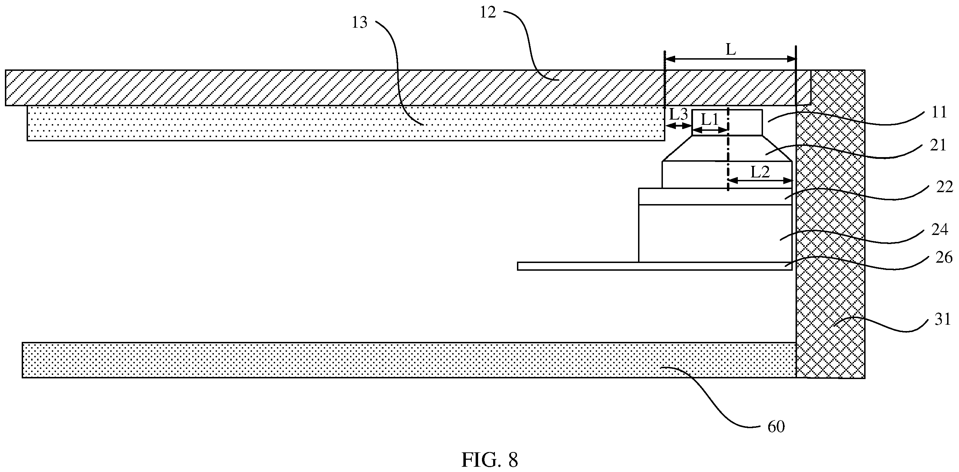

In the embodiments of this application, as shown in FIG. 8, when the front-facing camera module 20 is disposed in the mobile phone 10, one end of the front-facing camera module 20 may be fastened to the Metal part 32, and a head of the camera lens 21 of the front-facing camera module 20 may be located in the hole 11 of the display 10. A width of the hole 11 is L = L1 + L2 + L3, where L1 is 1/2 of a head width of the camera lens 21, L2 is 1/2 of a bottom width of the camera lens 21 (namely, L2 = 1/2h1), and L3 is a clearance width reserved for assembly. Therefore, to reduce the width L of the hole 11, in the embodiments of this application, edge cutting processing is performed on a bottom of the camera lens 21, to reduce the bottom width of the camera lens 21. In this case, the width L of the hole 11 is reduced. For a specific implementation, refer to the following descriptions.

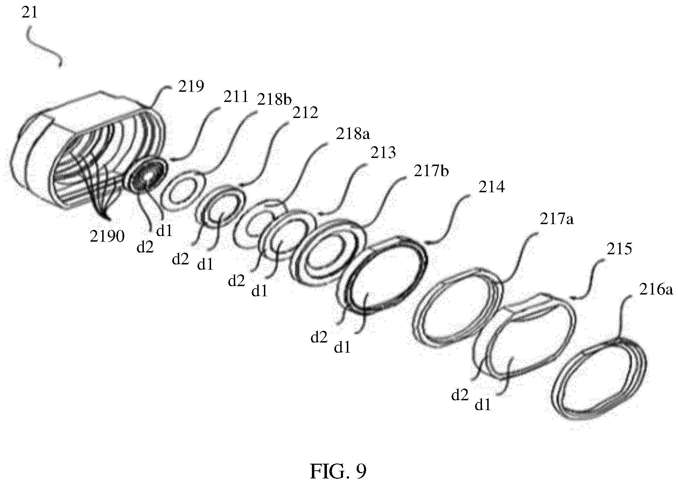

In the embodiments of this application, as shown in FIG. 9, the camera lens 21 may include a lens barrel 219, a lens group located inside the lens barrel 219, at least one light shielding sheet (for example, a first light shielding sheet 218b and a second light shielding sheet 218a), at least one spacer (for example, a first spacer 217b and a second spacer 217a), and a pressing ring 216a. A support part 2190 that supports the lens group, the light shielding sheet, and the pressing ring 216a exists on an inner wall of the lens barrel 219, so that when the lens group, the light shielding sheet, the spacer, and the pressing ring 216a are assembled inside the lens barrel 219, the lens group, the light shielding sheet, the spacer, and the pressing ring 216a may be bonded to and support each other. The pressing ring 216a is configured to perform final press-fitting after assembly of the lens, to ensure stability of assembly of each lens. The spacer may separate adjacent lenses by a preset distance, and the light shielding sheet is configured to block stray light at an outer edge of the lens. In the embodiments of this application, the lens group may include a front lens group and a rear lens group, the front lens group is close to an object side, and the rear lens group is close to an image side. In the embodiments of this application, that the front lens group includes three lenses and the rear lens group includes two lenses is used as an example for description.

Each lens may be a plastic lens (Plastic) or a glass lens (Glass). Alternatively, some lenses in the lens group are plastic lenses, and some lenses may be glass lenses.

For example, as shown in FIG. 9, the lens group may include a first lens 211, a second lens 212, a third lens 213, a fourth lens 214, and a fifth lens 215 from the object side to the image side. The front lens group may include the first lens 211, the second lens 212, and the third lens 213, and the first lens 211 is close to the object side. The rear lens group may include the fourth lens 214 and the fifth lens 215, and the fifth lens 215 in the rear lens group is close to the image side. The image side is a side on which imaging is performed, and the object side is a side on which a to-be-photographed object is located. Referring to FIG. 9, each lens includes an optically effective part d1 and a non-optically effective part d2. For example, the fourth lens 214 may include an optically effective part d1 and a non-optically effective part d2, and the fifth lens 215 may also include an optically effective part d1 and a non-optically effective part d2. The non-optically effective part d2 is disposed around an outer edge of the optically effective part d1. When each lens is assembled and mounted inside the lens barrel 219, the non-optically effective part d2 of the lens is supported by the support part 2190 of the lens barrel 219, and the light shielding sheet, the pressing ring 216a, or the spacer supports the non-optically effective part d2 of the lens inside the lens barrel 219 during assembly. In the embodiments of this application, the optically effective part d1 of each lens may be a region that is of the lens and through which light required for imaging passes, and the non-optically effective part d2 is a region that is of the lens and through which light required for imaging does not pass.

In the embodiments of this application, the first lens 211, the second lens 212, the third lens 213, the fourth lens 214, and the fifth lens 215 may be plastic lenses. The first lens 211, the second lens 212, the third lens 213, the fourth lens 214, and the fifth lens 215 may be aspheric lenses.

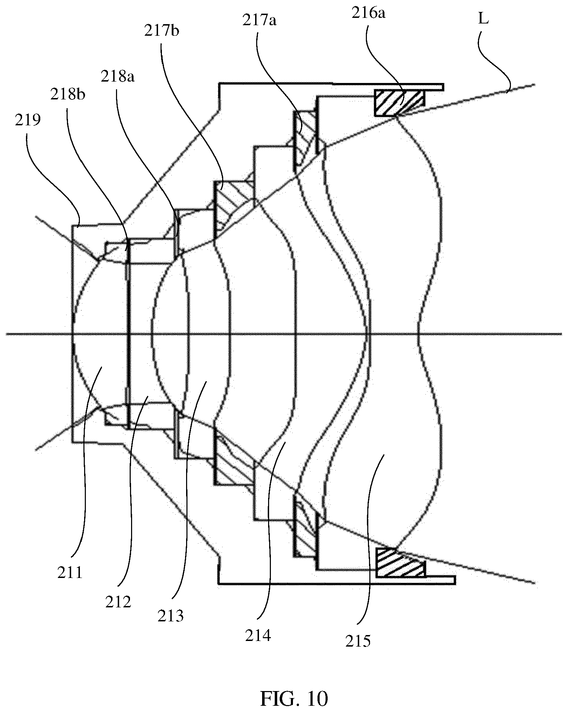

As shown in FIG. 9, the first light shielding sheet 218b is disposed between a non-optically effective part d2 of the first lens 211 and a non-optically effective part d2 of the second lens 212, the second light shielding sheet 218a is disposed between a non-optically effective part d2 of the second lens 212 and a non-optically effective part d2 of the third lens 213, the first spacer 217b is disposed between a non-optically effective part d2 of the third lens 213 and the non-optically effective part d2 of the fourth lens 214, the second spacer 217a is disposed between the non-optically effective part d2 of the fourth lens 214 and the non-optically effective part d2 of the fifth lens 215, and the pressing ring 216a is located on the image side of the fifth lens 215. The pressing ring 216a may be pressed against the non-optically effective part d2 of the fifth lens 215 and the support part 2190 inside the lens barrel 219. Therefore, in the embodiments of this application, the light shielding sheet may include the first light shielding sheet 218b and the second light shielding sheet 218a, and the spacer may include the first spacer 217b and the second spacer 217a. The first spacer 217b is used to separate the third lens 213 and the fourth lens 214 by a specific spacing, and the second spacer 217a is used to separate the fourth lens 214 and the fifth lens 215 by a specific spacing. During assembly, the first spacer 217b is bonded to and support the non-optically effective parts d2 of the third lens 213 and the non-optically effective parts d2 of the fourth lens 214, and the second spacer 217a is bonded to and support the non-optically effective parts d2 of the fourth lens 214 and the non-optically effective parts d2 of the fifth lens 215 (referring to FIG. 10).

The first spacer 217b and the second spacer 217a may be made of a non-transparent material. For example, the first spacer 217b and the second spacer 217a may be black plastic spacers. Therefore, the light shielding sheet may not be disposed between the non-optically effective part d2 of the third lens 213 and the non-optically effective part d2 of the fourth lens 214 and between the non-optically effective part d2 of the fourth lens 214 and the non-optically effective part d2 of the fifth lens 215. Certainly, a third light shielding sheet, a fourth light shielding sheet, a fifth light shielding sheet, and a sixth light shielding sheet are respectively disposed between the non-optically effective part d2 of the third lens 213 and the first spacer 217b, between the first spacer 217b and the non-optically effective part d2 of the fourth lens 214, between the non-optically effective part d2 of the fourth lens 214 and the second spacer 217a, and between the second spacer 217a and the non-optically effective part d2 of the fifth lens 215 (referring to FIG. 1).

Usually, to ensure that a field of view formed on the image side of the camera lens can cover an entire target surface of the photosensitive element (namely, an imaging region of the photosensitive element), as shown in FIG. 1, a lens closer to the photosensitive element has a larger effective aperture (namely, a diameter of an optically effective region of the lens). For example, in FIG. 1, effective apertures of the fourth lens and the fifth lens are increased. However, consequently, an outer diameter of one end that is of the lens barrel and that is close to the photosensitive element is large, a volume of the lens barrel is large, space occupied in the mobile phone is large, and a hole disposed on the display is large.

In the embodiments of this application, edge cutting processing is performed on the camera lens 21 to reduce a size of the camera lens 21 without affecting imaging. For example, as shown in FIG. 9, edge cutting processing is performed on an outer wall that is of the lens barrel 219 and that is close to the camera lens holder 22 (for example, a bottom of the lens barrel 219), and edge cutting processing is performed on each of the fourth lens 214, the second spacer 217a, the fifth lens 215, and the pressing ring 216a that are located on a cutting edge of the lens barrel 219 inside the lens barrel 219. Edge cutting processing is performed on the bottom of the lens barrel 2019, to reduce a bottom width of the lens barrel 219. In this way, the bottom width of the camera lens 21 is reduced, and a volume of the camera lens 21 is reduced. Therefore, space occupied by the camera lens 21 in the mobile phone 100 is reduced, and more components can be disposed in the mobile phone 100. In addition, a width of one end that is of the camera lens 21 and that is close to the camera lens holder 22 (namely, the bottom width of the camera lens 21) is reduced. For a big notch display, a water-drop notch display, or a punch-hole display, the width of the hole 11 on the display 10 is L = L1 + L2 + L3. After edge cutting is performed on the bottom of the camera lens 21, L2 is reduced. In this way, the width L of the hole 11 disposed on the display 10 is reduced. Therefore, a non-display region (for example, a Notch region) on the display 10 is reduced, and a screen-to-body ratio of the display 10 of the mobile phone 100 is increased. It is detected that after edge cutting is performed on the camera lens 21, as shown in FIG. 10, an outermost line L of an optically effective aperture of the camera lens 21 is not affected by the edge cutting. Therefore, after edge cutting is performed, the volume and the bottom width of the camera lens 21 are reduced without affecting imaging.

In the embodiments of this application, one edge of the outer wall of the lens barrel 219 may be cut, or two edges of the outer wall of the bottom of the lens barrel 219 may be cut. It should be noted that when two edges of the outer wall of the bottom of the lens barrel 219 are cut, the two edges are symmetrically distributed on the lens barrel 219.

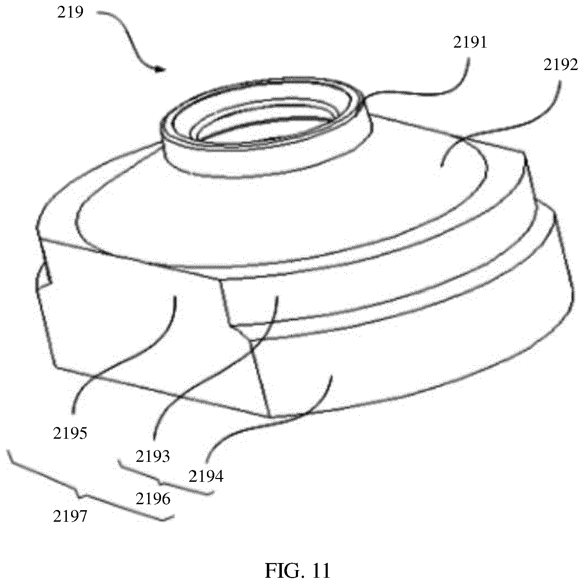

In a possible implementation, as shown in FIG. 11, the lens barrel 219 may include a front lens barrel 2191, a middle lens barrel 2192, and a rear lens barrel 2197, and the middle lens barrel 2192 is located between the front lens barrel 2191 and the rear lens barrel 2197. The front lens barrel 2191 may be in a straight tube shape, and the middle lens barrel 2192 may be in a tapered shape.

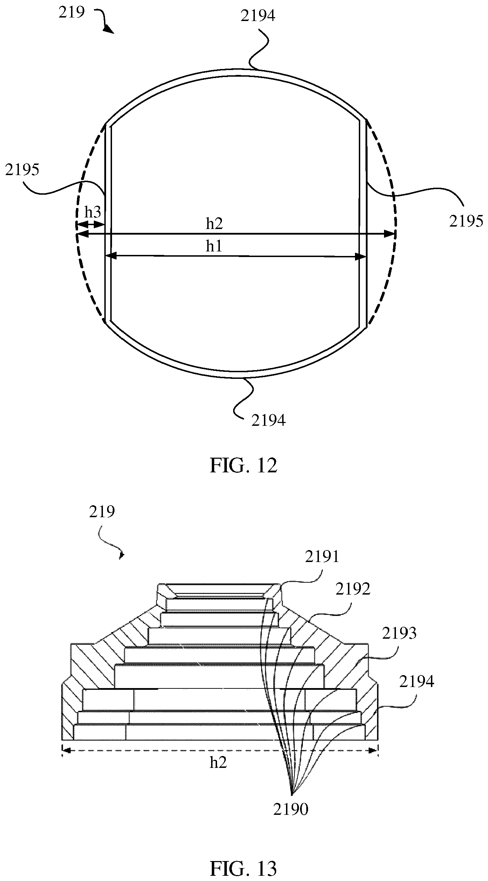

When edge cutting is performed on the lens barrel 219, edge cutting is specifically performed on the rear lens barrel 2197. After edge cutting is performed, the rear lens barrel 2197 may include at least one cutting surface 2195 and an arc-shaped side surface 2196. For example, as shown in FIG. 11, the rear lens barrel 2197 may include two cutting surfaces 2195 and two arc-shaped side surfaces 2196 connected to the two cutting surfaces 2195. The two cutting surfaces 2195 and the two arc-shaped side surfaces 2196 surround a side wall of the rear lens barrel 2197. The two cutting surfaces 2195 are symmetrically distributed with respect to a center line of the lens barrel 219. The arc-shaped side surface 2196 may include a first arc-shaped side surface 2193 and a second arc-shaped side surface 2194. The first arc-shaped side surface 2193 is located between an outer wall of the middle lens barrel 2192 and the second arc-shaped side surface 2194. A distance between the second arc-shaped side surface 2194 and the center line of the lens barrel 219 is greater than a distance between the first arc-shaped side surface 2193 and the center line of the lens barrel 219, and a step may be formed between the first arc-shaped side surface 2193 and the second arc-shaped side surface 2194 (referring to FIG. 13). In the embodiments of this application, the front lens barrel 2191, the middle lens barrel 2192, and the rear lens barrel 2197 may be connected through soldering, snap-fitting, or in a unibody structure.

In a possible implementation, as shown in FIG. 12, a distance h1 between the two cutting surfaces 2195 on the rear lens barrel 2197 is greater than or equal to 0.8h2 and less than h2, where h2 is a maximum distance between two arc-shaped surfaces on the rear lens barrel 2197, in other words, h2 is a diameter of a bottom end of the rear lens barrel 2197 before edge cutting is performed. For example, the diameter h2 of the bottom end of the rear lens barrel 2197 is 6.5 mm. After two edges are cut, the distance h1 between the two cutting surfaces 2195 of the rear lens barrel 2197 is less than 6.5 mm and greater than or equal to 5.2 mm. Therefore, the distance h1 between the two cutting surfaces 2195 of the lens barrel 219 can be reduced to 5.2 mm. Therefore, when edge cutting processing is performed on the rear lens barrel 2197 of the lens barrel 219, a width h3 of a part that is of each cutting surface 2195 and that is cut off is not greater than 0.65 mm, and when the rear lens barrel 2197 has two cutting surfaces 2195, a width of a part that is of the rear lens barrel 2197 and that is cut off is not greater than 1.3 mm. Therefore, L2 = 1/2h1, where L2 is greater than or equal to 2.6 mm, and a value of L2 can be a maximum of 0.65 mm less than a value of L2 existing before edge cutting is performed. Therefore, the width L of the hole 11 on the display 10 is reduced, the screen-to-body ratio is increased, a cross-sectional area and volume of the rear lens barrel 2197 are reduced, and the space occupied by the camera lens 21 is reduced.

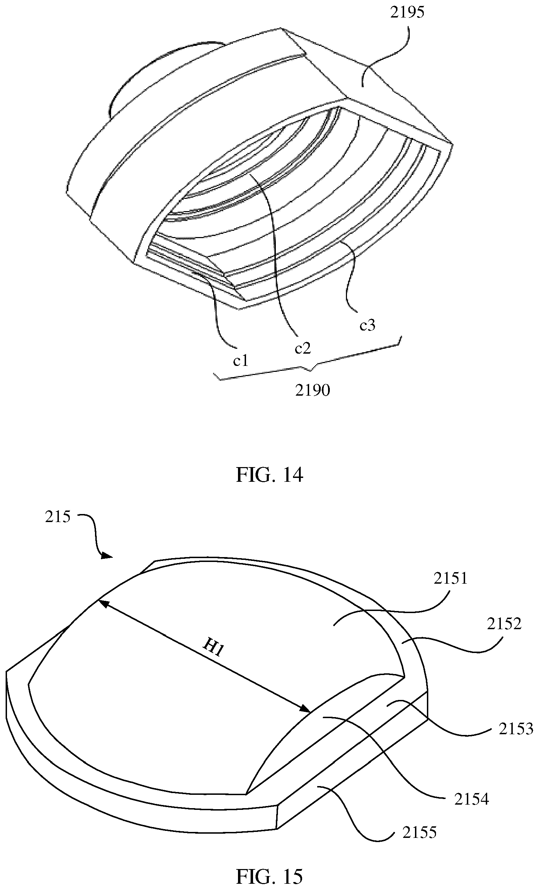

In a possible implementation, as shown in FIG. 13, a plurality of support parts 2190 are sequentially disposed on an inner wall of the lens barrel 219 from a top to a bottom, and the plurality of support parts 2190 are presented in a stepped-shape inside the lens barrel 219. In the embodiments of this application, after edge cutting is performed on the rear lens barrel 2197, as shown in FIG. 14, the support part 2190 disposed on the inner wall of the rear lens barrel 2197 may include an arc-shaped support segment c3 and a straight support segment c1, and the arc-shaped support segment c3 and the straight support segment c1 form an annular support part 2190 similar to a runway shape. A circular support segment c2 is formed on inner walls of the front lens barrel 2191 and the rear lens barrel 2197.

In a possible implementation, the fifth lens 215 may include the optically effective part d1 and the non-optically effective part d2 (referring to FIG. 9). During edge cutting, edge cutting is performed on both the optically effective part d1 and the non-optically effective part d2. Specifically, the optically effective part d1 of the fifth lens 215 may include an effective aperture region 2151 and a first cutting edge 2154. There may be one or two first cutting edges 2154. For example, as shown in FIG. 15, the optically effective part d1 of the fifth lens 215 includes the effective aperture region 2151 and two first cutting edges 2154, and the two first cutting edges 2154 may be symmetrically disposed on both sides of the effective aperture region 2151 with respect to an optical center of the fifth lens 215.

The non-optically effective part d2 of the fifth lens 215 may include a first non-effective region 2152 and a second non-effective region 2153, the first non-effective region 2152 is disposed along an outer edge of the effective aperture region 2151, and the second non-effective region 2153 is disposed along a bottom end of the first cutting edge 2154. The first non-effective region 2152 and the second non-effective region 2153 form an annular non-optically effective part d2. To reduce a width of the non-optically effective part d2 of the fifth lens 215, edge cutting is performed on the second non-effective region 2153. As shown in FIG. 15, the second non-effective region 2153 has a second cutting edge 2155. For example, a partial region of an outer edge of the second non-effective region 2153 is cut off, so that a width of the second non-effective region 2153 is reduced. In the embodiments of this application, the second non-effective region 2153 is located on the first cutting edge 2154, and the first non-effective region 2152 and the second non-effective region 2153 of the fifth lens 215 surround a non-optically effective part d2 similar to the runway shape.

In the embodiments of this application, the first cutting edge 2154 may be a longitudinal cutting surface as shown in FIG. 15. In some other examples, the first cutting edge 2154 may alternatively be an inclined surface that is inclined toward the second non-effective region 2153.

In the embodiments of this application, the second non-effective region 2153 has the second cutting edge 2155, so that the width of the second non-effective region 2153 of the fifth lens 215 is reduced. The second non-effective region 2153 is disposed on the first cutting edge 2154 of the fifth lens 215, to ensure that a non-effective aperture region (for example, the second non-effective region 2153) exists on the first cutting edge 2154 of the optically effective part d1. Therefore, when the fifth lens 215 is assembled inside the lens barrel 219, the first non-effective region 2152 of the fifth lens 215 is supported by the arc-shaped support segment c3 inside the lens barrel 219, and the second non-effective region 2153 is supported by the straight support segment c1 inside the lens barrel 219. After the second spacer 217a and the pressing ring 216a that are located on two sides of the fifth lens 215 are assembled, a partial region of the second spacer 217a and a partial region of the pressing ring 216a may be supported by the support part 2190 inside the lens barrel 219, and a remaining partial region of the second spacer 217a and a remaining partial region of the pressing ring 216a may be bonded to and support the second non-effective region 2153 and the first non-effective region 2152 of the fifth lens 215. Therefore, stability is ensured when the pressing ring 216a and the second spacer 217a are assembled with the fifth lens 215 inside the lens barrel 219.

In addition, the second non-effective region 2153 exists on the first cutting edge 2154 of the fifth lens 215. After the fifth lens 215 is assembled with the pressing ring 216a and the second spacer 217a inside the lens barrel 219, two sides of the second non-effective region 2153 that face the image side and the object side may be respectively supported by the partial region of the second spacer 217a and the partial region of the pressing ring 216a. In this case, the pressing ring 216a and the second spacer 217a can support the fifth lens 215 on the first cutting edge 2154, so that an entire outer edge of the fifth lens 215 is supported by the pressing ring 216a and the second spacer 217a, to ensure that the fifth lens 215 is supported more stably when the fifth lens 215 is assembled inside the lens barrel 219. In addition, the pressing ring 216a and the second spacer 217a are prevented from blocking the effective aperture region 2151 of the fifth lens 215.

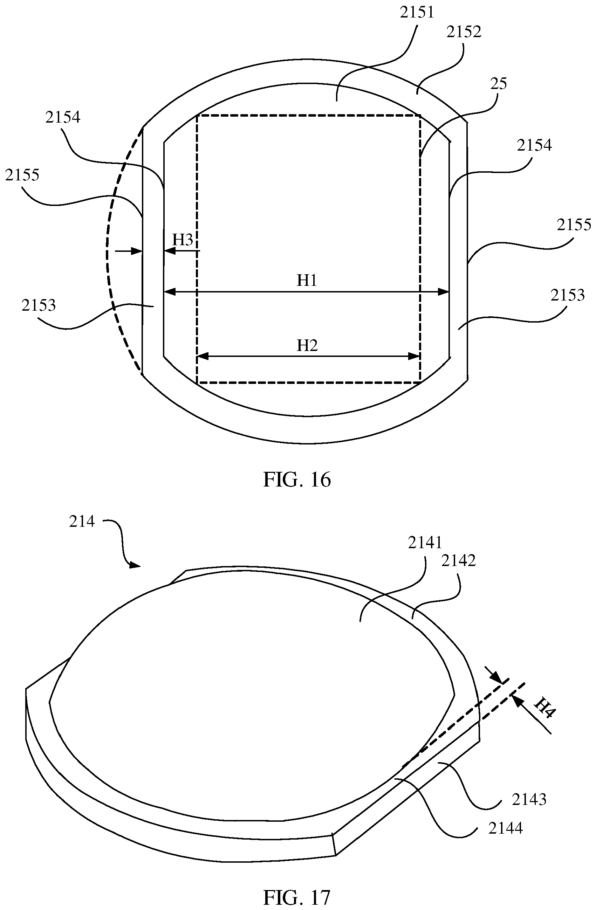

In some examples, as shown in FIG. 16, when the optically effective part d1 of the fifth lens 215 includes the two first cutting edges 2154 and the effective aperture region 2151, a minimum distance H1 between the two first cutting edges 2154 is greater than or equal to a short side length H2 of the photosensitive element 25. Therefore, it is ensured that each photosensitive region on the photosensitive element 25 can sense light, to generate complete image information. In some examples, the short side length H2 of the photosensitive element 25 may be 3.917 mm, and the diameter of the optically effective part d1 of the fifth lens 215 may be 5.3 mm, so that the minimum distance H1 between the two first cutting edges 2154 is greater than or equal to 3.917 mm. For example, the minimum distance H1 between the two first cutting edges 2154 may be 4 mm. Therefore, a width that is of a part of the optically effective part d1 of the fifth lens 215 and that is cut off is 0.65 mm, and a width that is of a part of the two cutting edges and that is cut off is 1.3 mm. Alternatively, the minimum distance H1 between the two first cutting edges 2154 may be 4.5 mm. Therefore, a width that is of a part of the optically effective part d2 of the fifth lens 215 and that is cut off is 0.4 mm, and a width that is of a part of the two cutting edges and that is cut off is 0.8 mm.

In the embodiments of this application, the width H3 of the second non-effective region 2153 may range from 0.1 mm to 0.65 mm. For example, the width H3 of the second non-effective region 2153 may be 0.35 mm, or the width H3 of the second non-effective region 2153 may be 0.25 mm. It should be noted that the width H3 of the second non-effective region 2153 may be but is not limited to the foregoing value. When the second non-effective region 2153 is disposed, it only needs to be ensured that the second non-effective region 2153 can be supported by the second spacer 217a and the pressing ring 216a.

In a possible implementation, the fourth lens 214 may include the optically effective part d1 and the non-optically effective part d2 disposed around the outer edge of the optically effective part d1, and edge cutting is performed the non-optically effective part d2 of the fourth lens 214. As shown in FIG. 17, edge cutting is not performed on the optically effective region 2141 of the fourth lens 214, and the non-optically effective part d2 of the fourth lens 214 may include a third non-effective region 2142 and a fourth non-effective region 2144. The fourth non-effective region 2144 may include at least one third cutting edge 2143. For example, FIG. 17 shows two third cutting edges 2143. The third cutting edge 2143 is disposed, so that a width H4 of the fourth non-effective region 2144 of the fourth lens 214 is reduced, and the width of the fourth non-effective region 2144 of the fourth lens 214 is reduced when imaging is satisfied. When the width of the fourth non-effective region 2144 of the fourth lens 214 is reduced, a wall thickness that is of the lens barrel 219 and that is on a location of the fourth lens 214 may be increased, so that strength that is of the lens barrel 219 and that is on a location of the fourth lens 214 is greater.

In the embodiments of this application, the width H4 of the fourth non-effective region 2144 of the fourth lens 214 may range from 0.2 mm to 0.35 mm. For example, a diameter of the optically effective part d1 of the fourth lens 214 may be 3.9 mm, and a diameter of the non-optically effective part d2 of the fourth lens 214 may be 4.7 mm Therefore, a width of the third non-effective region 2142 may be 0.4 mm, and the width H4 of the fourth non-effective region 2144 may be 0.25 mm or 0.3 mm

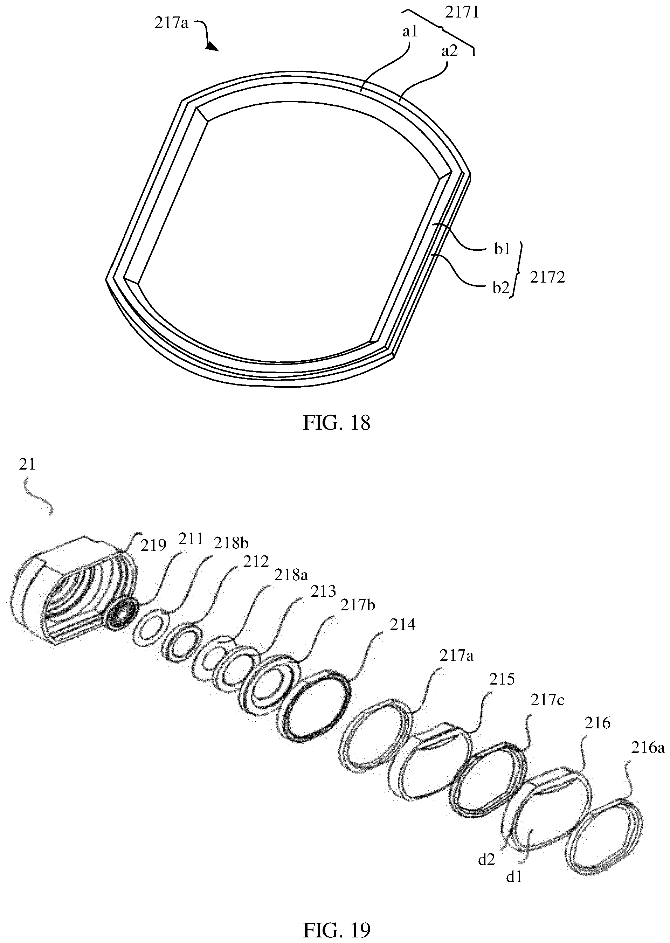

In a possible implementation, after edge cutting is performed on the fourth lens 214 and the fifth lens 215, the second spacer 217a may include an arc-shaped segment 2171 and at least one straight segment 2172, and the arc-shaped segment 2171 and the straight segment 2172 form an annular spacer, so that the second spacer 217a supports the non-optically effective part d2 of the fourth lens 214 and the non-optically effective part d2 of the fifth lens 215. In the embodiments of this application, when the fourth lens 214 and the fifth lens 215 have two cutting edges, as shown in FIG. 18, the second spacer 217a may include two arc-shaped segments 2171 and two straight segments 2172, and the arc-shaped segment 2171 and the straight segment 2172 of the second spacer 217a surround an annular structure similar to the runway shape. When the second spacer 217a is assembled inside the lens barrel 219, the arc-shaped segment 2171 of the second spacer 217a is supported by the arc-shaped support segment inside the lens barrel 219, and the straight segment 2172 of the second spacer 217a is supported by the straight support segment inside the lens barrel 219.

For example, as shown in FIG. 18, on a surface that is of the second spacer 217a and that faces the fourth lens 214, the arc-shaped segment 2171 may include an arc-shaped outer region a2 and an arc-shaped inner region a1, and the straight segment 2172 includes a straight outer region b2 and a straight inner region b1. During assembly, referring to FIG. 10, the arc-shaped outer region a2 and the straight outer region b2 may be supported by the support part 2190 inside the lens barrel 219, and the arc-shaped inner region a1 and the straight inner region b1 may support the third non-effective region 2142 and the fourth non-effective region 2144 of the fourth lens 214. A surface that is of the second spacer 217a and that faces the fifth lens 215 supports the first non-effective region 2152 and the second non-effective region 2153 of the fifth lens 215.

In the embodiments of this application, an inner side wall of the second spacer 217a is disposed in an inclined state (a side wall connected to the arc-shaped inner region a1 and straight inner region b1 in FIG. 18). In this way, an opening at one end that is of the second spacer 217a and that faces the fifth lens 215 is enlarged, and the second spacer 217a is prevented from blocking the optically effective region of the fifth lens 215.

In a possible implementation, edge cutting is performed on the pressing ring 216a. After edge cutting is performed, for a structure of the pressing ring 216a, refer to a structure of the second spacer 217a shown in FIG. 18. For example, the pressing ring 216a may also include an arc-shaped region (referring to the arc-shaped segment 2171 in FIG. 18) and a straight region (referring to the straight segment 2172 in FIG. 18). There may be one or two straight regions. When the pressing ring 216a has two straight regions, the straight region and the arc-shaped region of the pressing ring 216a surround an arc-shaped pressing ring similar to the runway shape. During assembly, the arc-shaped region of the pressing ring 216a is supported by the arc-shaped support segment c3 inside the lens barrel 219, and the straight region of the pressing ring 216a is supported by the straight support segment c1 inside the lens barrel 219. A partial region of a surface that is of the pressing ring 216a and that faces the fifth lens 215 abuts against the support part 2190 of the lens barrel 219, and a remaining partial region may abut against the first non-effective region 2152 and the second non-effective region 2153 of the fifth lens 215. In the embodiments of this application, the pressing ring 216a may be fastened to the inner wall of the bottom end of the rear lens barrel 2197 through gluing, so that each lens, the light shielding sheet, and the spacer are assembled inside the lens barrel 219 by using the pressing ring 216a.

In some other examples, the camera lens 21 may alternatively be used as a camera lens in a rear-facing camera module. For example, the electronic device may further include the rear-facing camera module, and the rear-facing camera module may include the camera lens 21, the holder 24, the photosensitive element 25, and the flexible printed circuit 26. The rear-facing camera module may be disposed on a surface that is of the Metal part 32 and that faces the rear cover 60. The camera lens 21 of the rear-facing camera module faces the rear cover 60, a hole is disposed on the rear cover 60, and a head of the camera lens 21 is installed in the hole disposed on the rear cover 60. In the embodiments of this application, because edge cutting is performed on the bottom of the camera lens 21, a width of the bottom of the camera lens 21 is reduced. Therefore, a width of the hole disposed on the rear cover 60 is reduced in an X direction or a Y direction, an area of the hole on the rear cover 60 is reduced, appearance of the rear cover 60 is more aesthetic, and strength of the rear cover 60 is stronger. In addition, the bottom width of the camera lens 21 is reduced, so that the volume of the camera lens 21 is reduced. Therefore, space occupied by the rear-facing camera module in the electronic device is reduced, and another component may be disposed in saved space in the electronic device.

### Scenario 2

In the embodiments of this application, as shown in FIG. 19, the lens group may include six lenses, and the six lenses are respectively a first lens 211, a second lens 212, a third lens 213, a fourth lens 214, a fifth lens 215, and a sixth lens 216. The front lens group may include three lenses, and the three lenses are respectively the first lens 211, the second lens 212, and the third lens 213. The rear lens group may include the fourth lens 214, the fifth lens 215, and the sixth lens 216. The fifth lens 215 is located between the fourth lens 214 and the sixth lens 216, and the sixth lens 216 is close to the image side. For structures of the fifth lens 215 and the sixth lens 216, refer to the structure of the fifth lens 215 in the scenario 1. For example, as shown in FIG. 19, the sixth lens 216 may include an optically effective part d1 and a non-optically effective part d2, a third spacer 217c may be disposed between a non-optically effective part d2 of the fifth lens 215 and the non-optically effective part d2 of the sixth lens 216, and the pressing ring 216a is pressed against the non-optically effective part d2 that is of the sixth lens 216 and that faces the image side. In other words, in the embodiments of this application, the third spacer 217c and the sixth lens 216 are added between the fifth lens 215 and the pressing ring 216a.

In the embodiments of this application, during edge cutting, edge cutting is performed on the fourth lens 214, the second spacer 217a, the fifth lens 215, the third spacer 217c, the sixth lens 216, and the pressing ring 216a. For structures of the fourth lens 214, the second spacer 217a, the fifth lens 215, and the pressing ring 216a, refer to descriptions in the scenario 1. For an edge cutting manner of the optically effective part d1 and the non-optically effective part d2 of the sixth lens 216, refer to an edge cutting structure of the fifth lens 215 in FIG. 15. For example, the optically effective part d1 of the sixth lens 216 may have at least one cutting edge, the non-optically effective part d2 of the sixth lens 216 may include a fifth non-effective region disposed along the cutting edge and a sixth non-effective region disposed along an edge of the optically effective region (referring to the first non-effective region 2152 and the second non-effective region 2153 in FIG. 15), and there is a cutting edge on an outer edge of the fifth non-effective region (referring to the second cutting edge 2155 in FIG. 15).

In the embodiments of this application, edge cutting processing is performed on the sixth lens 216 and the third spacer 217c. Therefore, when the sixth lens 216 is added, a volume and a cross-sectional area of the rear lens barrel 2197 of the camera lens 21 are reduced, space occupied by the camera lens 21 in the electronic device is reduced, and saved space may be used to dispose more components in the electronic device. In addition, a size of the hole 11 on the display 10 is reduced, so that an area of a non-display region (for example, a Notch region) on the display 10 is reduced, and a screen-to-body ratio is higher.

In the descriptions of the embodiments of this application, it should be noted that, unless otherwise clearly specified and limited, terms "assemble", "connected", and "connection" should be understood in a broad sense. For example, the terms may be used for a fixed connection, an indirect connection through an intermediate medium, an internal connection between two elements, or an interaction relationship between two elements. Persons of ordinary skill in the art may understand specific meanings of the terms in the embodiments of this application based on actual conditions.

In the specification, claims, and accompanying drawings of embodiments of this application, the terms "first", "second", "third", "fourth", and so on (if existent) are intended to distinguish between similar objects but do not necessarily indicate a specific order or sequence.

Finally, it should be noted that the foregoing embodiments are merely intended for describing the technical solutions of the embodiments of this application rather than limiting this application. Although the embodiments of this application are described in detail with reference to the foregoing embodiments, persons of ordinary skill in the art should understand that they may still make modifications to the technical solutions described in the foregoing embodiments or make equivalent replacements to a part or all technical features thereof, without departing from the scope of the technical solutions of the embodiments of this application.

## Claims

1. A camera lens, applied to a camera module having a photosensitive element, comprising:
a lens barrel and a front lens group and a rear lens group that are disposed inside the lens barrel, wherein the front lens group is close to an object side, and the rear lens group is close to an image side;
a lens close to the image side in the rear lens group comprises an optically effective part and a non-optically effective part disposed around an outer edge of the optically effective part;
the optically effective part comprises an effective aperture region and at least one first cutting edge;
the non-optically effective part comprises a first non-effective region and a second non-effective region, the first non-effective region is disposed along an outer edge of the effective aperture region, the second non-effective region is disposed along the first cutting edge, and there is a second cutting edge on an outer edge of the second non-effective region; and
there is at least one cutting surface on an outer side wall that is of the lens barrel and that is close to the rear lens group, and the second cutting edge faces the cutting surface inside the lens barrel.

2. The camera lens according to claim 1, wherein there are two first cutting edges, and the two first cutting edges are symmetrically disposed with respect to a center of the optically effective part.

3. The camera lens according to claim 2, wherein a distance between the two first cutting edges is greater than or equal to a short edge width of the photosensitive element.

4. The camera lens according to any one of claims 1 to 3, wherein a width of the second non-effective region ranges from 0.1 mm to 0.65 mm

5. The camera lens according to any one of claims 1 to 4, wherein the lens barrel comprises a front lens barrel, a middle lens barrel, and a rear lens barrel, and an outer side wall of the rear lens barrel comprises the cutting surface and an arc-shaped side surface connected to the cutting surface.

6. The camera lens according to claim 5, wherein there are a plurality of straight support segments on an inner wall that is of the rear lens barrel and that is close to the cutting surface, and there are a plurality of arc-shaped support segments on an inner wall that is of the rear lens barrel and that is close to the arc-shaped side surface.

7. The camera lens according to claim 5 or 6, wherein there are two cutting surfaces and two arc-shaped side surfaces on the outer side wall of the rear lens barrel, and the two cutting surfaces are symmetrically disposed relative to a center line of the lens barrel.

8. The camera lens according to claim 7, wherein
a distance between the two cutting surfaces is h1, 0.8h2 ≤ h1 < h2, and h2 is a maximum distance between two arc-shaped surfaces.

9. The camera lens according to any one of claims 1 to 8, wherein the rear lens group comprises at least two lenses; and
a lens close to the front lens group in the at least two lenses comprises an optically effective part and a non-optically effective part, there is a third cutting edge on an outer edge of the non-optically effective part of the lens close to the front lens group, and the third cutting edge faces the cutting surface.

10. The camera lens according to claim 9, wherein the rear lens group comprises three lenses, a middle lens located between two of the three lenses and the lens close to the image side each comprise an effective aperture region, at least one first cutting edge, a first non-effective region, a second non-effective region, and a second cutting edge.

11. The camera lens according to any one of claims 1 to 10, further comprising at least two spacers located inside the lens barrel, wherein one of the at least two spacers is located between the front lens group and the rear lens group, and the other spacers in the at least two spacers are located between non-optically effective parts of two adjacent lenses in the rear lens group.

12. The camera lens according to claim 11, wherein the spacer between the two adjacent lenses in the rear lens group comprises an arc-shaped segment and a straight segment, the arc-shaped segment and the straight segment form an annular structure, and the straight segment faces the cutting surface.

13. The camera lens according to any one of claims 1 to 12, further comprising a pressing ring, wherein the pressing ring is connected to an inner wall at one end that is of the lens barrel and that faces the image side, and the rear lens group is located between the front lens group and the pressing ring; and
the pressing ring comprises an arc-shaped region and a straight region, and the straight region faces the cutting surface.

14. The camera lens according to any one of claims 1 to 13, wherein the front lens group comprises at least three lenses, and a light shielding sheet is disposed between non-optically effective parts of two adjacent lenses in the three lenses.

15. A camera module, comprising at least the following:
a flexible printed circuit, a photosensitive element, a holder, a light filter, and the camera lens according to any one of claims 1 to 14, wherein the holder is located between the camera lens and one end of the flexible printed circuit, the photosensitive element is located at one end that is of the flexible printed circuit and that is opposite to the camera lens, and the light filter is located between the photosensitive element and the camera lens.

16. An electronic device, comprising at least the following:
a display, a rear cover, a middle frame, and at least one camera module according to claim 15, wherein the display and the rear cover are respectively located on two sides of the middle frame, the camera module is disposed on the middle frame, and a camera lens of the camera module faces the display or faces the rear cover.

17. The electronic device according to claim 16, wherein the camera module is a front-facing camera module, or the camera module is a rear-facing camera module.

18. The electronic device according to claim 16, wherein there are two camera modules, one camera module is a rear-facing camera module, and the other camera module is a front-facing camera module.
